# EUROPEAN PATENT APPLICATION

(11) **EP 2 169 975 A1**
(43) Date of publication of application: **31.03.2010**
(21) Application number: 08765726.8
(22) Date of filing: 18.06.2008
(51) Int. Cl.: H04Q 1/00

(54) **RADIO CONTROL DEVICE, RADIO COMMUNICATION SYSTEM, AND COMMUNICATION PATH SETTING METHOD**

(30) Priority: 18.06.2007 JP 2007160288
(71) Applicant: NTT DoCoMo, Inc., Chiyoda-ku Tokyo 100-6150 (JP)
(72) Inventor: OKAMOTO, Takeshi, Tokyo 100-6150 (JP); MASUDA, Masafumi, Tokyo 100-6150 (JP); WATANABE, Yasuyuki, Tokyo 100-6150 (JP)
(74) Representative: Henseler, Daniela
(86) International application number: PCT/JP2008/061159
(87) International publication number: WO 2008/156120

(57) **Abstract**

Loss in a transmission path cost, transmission delay of user data, and load applied on a transmission path are suppressed between a transmission device and a base transceiver station to be selected for every call at the time of originating communication. There is provided a table in which an identical identifier is applied to the transmission device and the base transceiver station that are close to each other in distance including a consideration of a network topology. The transmission device and the base transceiver station to be used for setting up a communication path are selected on the basis of the identifier. The table is composed of: a table A indicative of a correspondence relationship between the identifier to be applied in accordance with a distance from a given device in consideration of the network topology; and a table B indicative of a correspondence relationship between the identifier and the transmission device. The transmission device is selected by referring to these tables.

## Description

### Technical Field

The present invention relates to radio network controllers, radio communication systems, and communication path setting methods, particularly to a radio network controller whereby a communication path is set up by use of a transmission device and a base transceiver station to be selected for every call when communication is originated, a radio communication system including the radio network controller, and a communication path setting method.

### Background Art

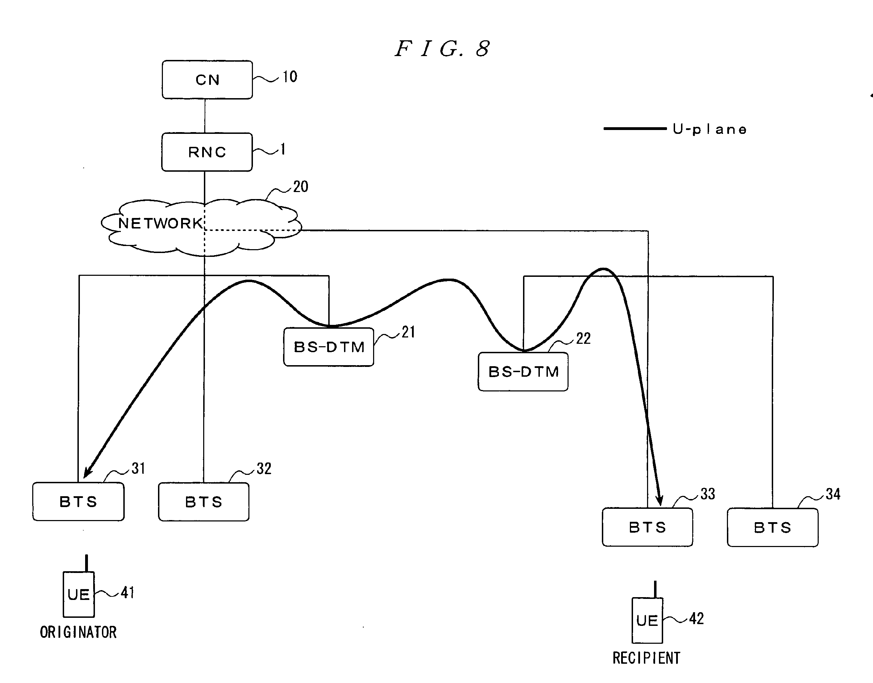

In recent years, 3GPP (3^{rd} Generation Partnership Projects) have proposed a mobile communication system named as W-CDMA system on the basis of Code Division Multiple Access (CDMA) technology. Such a proposed system is specified in 3GPP technical specification TS 21.101.
A mobile communication network shown in FIG. 8 is composed of: a Radio Network Controller (hereinafter referred to as RNC) 1 connected to a core network (hereinafter referred to as CN) 10; and base transceiver stations (hereinafter referred to as BTS) 31, 32, 33, and 34 connected to the RNC 1 via a network (Network) 20. User Equipments 41 and 42 (hereinafter referred to as UE) are capable of making use of mobile communication services to be provided by the BTSs, when they are located within radio service areas. That is to say, when a call is originated from an originator UE 41, a communication path is established with a recipient UE 42 to enable a telephone call and communication.

The above configuration is a mobile radio communication system that complies with 3GPP. In addition to the above configuration, the network of FIG. 8 also includes Base Station-Data Transfer Modules (hereinafter referred to as BS-DTM) 21 and 22, to be selected by the RNC 1. The BS-DTMs 21 and 22 is equipped with a user data termination/forwarding function, whereby every call is connected by an RNC at the start of communication to establish a communication path with a BTS.

In the network with such a configuration, the provision of the BS-DTMs 21 and 22 enables a telephone call and communication by transmitting the user data back, without passing the user data to the RNC 1. Accordingly, the communication path of the user data (U-Plane) is shortened as indicated by a thick line in the drawing. Such a technique is described in JP 2004-364054 (hereinafter, referred to as Document 1).

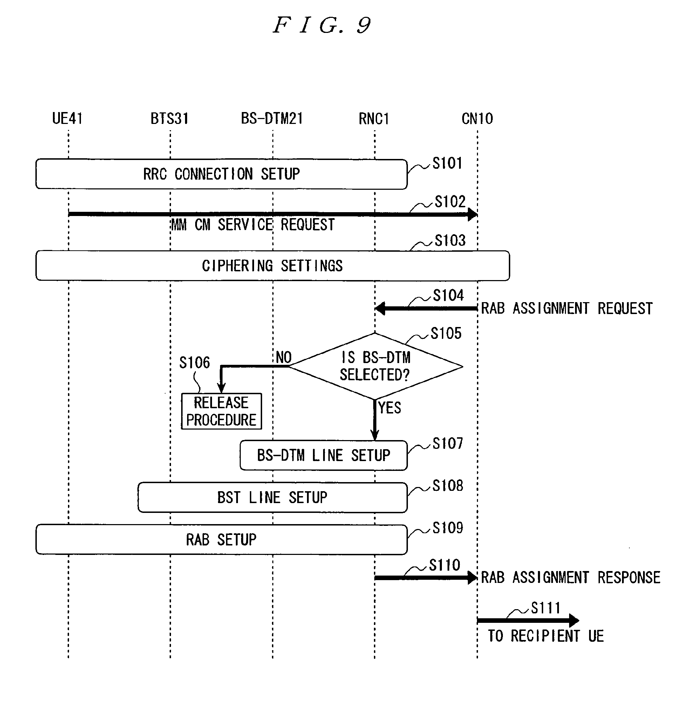

Now, a sequence example for setting up a BS-DTM communication line in a Circuit Switching (CS) communication will be described with reference to FIG. 9.
In FIG. 9, the originator UE 41 transmits a communication start request, a radio connection setup (RRC Connection Setup) is conducted between the UE and the RNC (S101). Next, a service request signal (MM CM Service Request) is transmitted to an upper node from the originator UE 41 (S102), and then the setup (including ciphering settings or the like) is started between the ORIGINATOR UE 41 and the upper node (S103).

Subsequently, a Radio Access Bearer Assignment Request (RAB Assignment Request) is transmitted from the upper node in the CN 10 to the RNC 1, so the BS-DTM for the originator is selected at the RNC (S105). If there are multiple BS-DTMs, the correspondence of the BTS and the BS-DTM is performed when a call is originated.
In this situation, as logic of selecting a BS-DTM, examples are a method of assigning resources (in this case, BS-DTM) sequentially and a method of assigning resources randomly. If a BS-DTM cannot be selected, the processing goes onto a release procedure (S105 → S106).

If a BS-DTM is selected, the BS-DTM line setup between the BS-DTM and the RNC is performed (S105 → S107). Next, the BTS line setup between the BTS and the RNC is performed (S108). Then, radio access setup is performed (S109), and an RAB Assignment Response is transmitted from the RNC 1 to the upper node in the CN 10 (S110). Subsequently, the processing is shifted to the settings for the recipient (S111). The BS-DTM line setup sequence for the recipient includes a sequence of Paging in the beginning. However, the subsequent sequence is identical to that of the BS-DTM line setup sequence for the originator.

It should be noted that, however, the communication enabled without going through the CN is also described in JP 2006-108891 A (hereinafter, referred to as Document 2). In addition, JP H08-294168 A (hereinafter, referred to as Document 3) describes that the communication is shifted to a state without the intervention of a base transceiver station, when an identical base transceiver station is used for establishing the communication, and also describes determining of whether or not the positional relationship between terminals are close to each other at the time of shifting.

### Disclosure of the Invention

### (Problem to Be Solved by the Invention)

In the above-described configuration, if there are multiple BS-DTMs, a BS-DTM close to the BTS is not always selected. Herein, "far or close" in this case denotes not only a physical distance but also a distance including the consideration of a network topology. That is to say, in a case where there are BS-DTMs, one of which is close to and another of which is far from the BTS when the consideration of the network topology is also included, the BS-DTM closest to the BTS is not always selected when a call is originated. For this reason, if a BS-DTM far from the BTS is selected, such a selection will cause drawbacks of loss in transmission cost between the selected BS-DTM and the BTS, transmission delay of user data, and load applied on a transmission path. Neither Document 1 nor Document 2 addresses such drawbacks.

Document 3 describes the determination of a positional relationship of mobile terminals in a service area of a base transceiver station, and does not address the above drawbacks generated at the time of BS-DTM selection.
The present invention has been made to address the above drawbacks described in Background Art, and it is an object of the present invention to provide a radio network controller, a radio communication system, and a communication path setting method, whereby loss in a transmission cost, transmission delay of user data, and load on the transmission path between a BTS and a BS-DTM are suppressed.

### (Means for Solving the Problem)

According to an aspect of the present invention, there is provided a radio network controller that sets up a communication path by use of a transmission device and a base transceiver station to be selected for every call, when communication is originated, the radio network controller comprising select means for selecting the transmission device and the base transceiver station that are close to each other in distance including a consideration of a network topology, wherein the communication path is set up by use of the transmission device and the base transceiver station selected by the select means.
This allows an appropriate transmission device to be selected, thereby suppressing the loss in the transmission path cost, transmission delay of user data, and load on the transmission path between a BTS and a BS-DTM are suppressed.

In the above configuration, the radio network controller may further comprise a table in which an identical identifier is applied to the transmission device and the base transceiver station that are close to each other in distance including the consideration of the network topology, wherein the select means selects the transmission device and the base transceiver station to be used for setting up the communication path, on the basis of the identifier.
This allows the transmission device and the base transceiver station to be selected in an appropriate manner by referring to the identifier in the table.

In the above configuration, the table may include: a first table indicative of a correspondence relationship between the identifier and the base transceiver station, the identifier being applied in accordance with a distance from a given device in consideration of the network topology; and a second table indicative of a correspondence relationship between the identifier and the transmission device, and the select means refers to the first table and the second table and selects the transmission device.
The provision of the first table and the second table allows the transmission device and the base transceiver station to be selected in an appropriate manner by referring to the identifier in the table, even if the correspondence relationship among the transmission device, the base transceiver station, and the identifier is complicated.

In the above configuration, a plurality of the identifiers may be applied to a single transmission device in the table, and the select means may select the transmission device on the basis of the number of the identifiers corresponding thereto.
This allows the selection of the transmission device with the smallest number of the identifiers to corresponding thereto, thereby setting up a communication path by use of an appropriate transmission device and an appropriate base transceiver station.

In the above configuration, the second table may include a correspondence relationship between a special identifier that is not included in the first table and the transmission device corresponding to the special identifier, and the select means may select the transmission device corresponding to the special identifier, if the identifier extracted by referring to the first table is not included in the second table.
This allows the transmission device to be commonly used nationwide, if the special identifier is corresponding to the newly provided transmission device. This also allows the transmission device to be selected, even if the information on the correspondence between the identifier and the transmission device is not updated at the time when the facilities are increased or reduced, thereby curtailing the maintenance operations.

According to another aspect of the present invention, there is provided a radio communication system that sets up a communication path by use of a transmission device and a base transceiver station, the system comprising select means for selecting the transmission device and the base transceiver station that are close to each other in distance including a consideration of a network topology, wherein the communication path is set up by use of the transmission device and the base transceiver station selected by the select means.
This allows an appropriate transmission device to be selected, thereby suppressing the loss in the transmission path cost between the base transceiver station and the transmission device, the transmission delay of user data, and the load on the transmission path.

According to further another aspect of the present invention, there is provided a communication path setting method for setting up a communication path by use of a transmission device and a base transceiver station to be selected for every call, when communication is originated, the method comprising: referring to a first table indicative of a correspondence relationship between an identifier and the base transceiver station, the identifier being applied in accordance with a distance from a given device in consideration of a network topology; referring to a second table indicative of a correspondence relationship between the identifier and the transmission device; and setting up the communication path by use of the transmission device that has been selected on the basis of a result of referring to the first table and the second table.
The provision of the first table and the second table allows the communication path to be set up in an appropriate manner, even if the correspondence relationship among the transmission device, the base transceiver station, and the identifier is complicated.

### (Effect of the Invention)

According to an aspect of the present invention, it is made possible to suppress the loss in a transmission path cost, the transmission delay of user data, and the load on a transmission path, to be addressed, between a transmission device and a base transceiver station, in implementing a radio communication system in which use data is turned at a transmission device instead of going through a radio network controller, so as to shorten the communication path of the user data.

### Brief Description of the Drawings

FIG. 1 is a block view illustrative of an example of main components of an RNC in a system according to the present embodiment;
FIG. 2 is a view illustrative of an example of a correspondence table between a BTS number that is an identifier of a BTS and a Location ID;
FIG. 3 is a view illustrative of an example of a correspondence table between the Location ID and a BS-DTM number that is an identifier of a BS-DTM;
FIG. 4 is a flowchart illustrative of an example of logic of selecting the BS-DTM at the time of originating a call according to the present embodiment;
FIG. 5 is a flowchart illustrative of details of a process of extracting the BS-DTM from the Location ID (step S205);
FIG. 6 is a view illustrative of an image of applying the Location ID;
FIG. 7 is a view illustrative of examples of criteria for determining that the distance including the consideration of network topology is close;
FIG. 8 is a view illustrative of a configuration example of a mobile communication network; and
FIG. 9 is a view illustrative of a sequence example of setting up a BS-DTM line in circuit switching.

### Explanation of References

- 1: radio network controller
- 10: core network
- 11: RANAP signal transmitter/receiver
- 12: transmitter/receiver for BS-DTM
- 13: signal analysis generator
- 14: BS-DTM selector
- 15: Location ID extractor extracting from BTS number
- 16: BS-DTM number extractor extracting from Location ID
- 17: static memory
- 21 - 24: transmission device
- 31 - 36: base transceiver station
- 41, 42: user equipment
- 50 - 57: router
- A, B: table

### Best Mode for Carrying Out the Invention

Embodiments of the present invention will now be described with reference to the drawings. In each of the drawings to be referenced to in the following description, the same components and configurations have the same reference numerals.
The entire configuration of a radio communication system according to the present embodiment is same as that shown in FIG. 8. In addition, the entire sequence at the time of originating a call according to the present embodiment is same as that shown in FIG. 9.

### (System Overview)

In a case where there are BS-DTMs, one of which is close to and another of which is far from a BTS, it is necessary to provide measures of preferentially selecting a BS-DTM that is closest to the BTS in distance including the consideration of the network topology. In the present system, to accomplish the above measure, an identical identifier (hereinafter, referred to as Location ID) is beforehand applied to a BTS and a BS-DTM that are close to each other in distance including the consideration of the network topology.
Additionally, when a call is originated, a BS-DTM is selected by use of the afore-mentioned Location ID. That is, in the present system, the BS-DTM applied with an identical Location ID is preferentially selected on the basis of the Location ID of the BTS when a call is originated. This is different from the techniques described above in Background Art.

### (Example of Main Configuration of RNC)

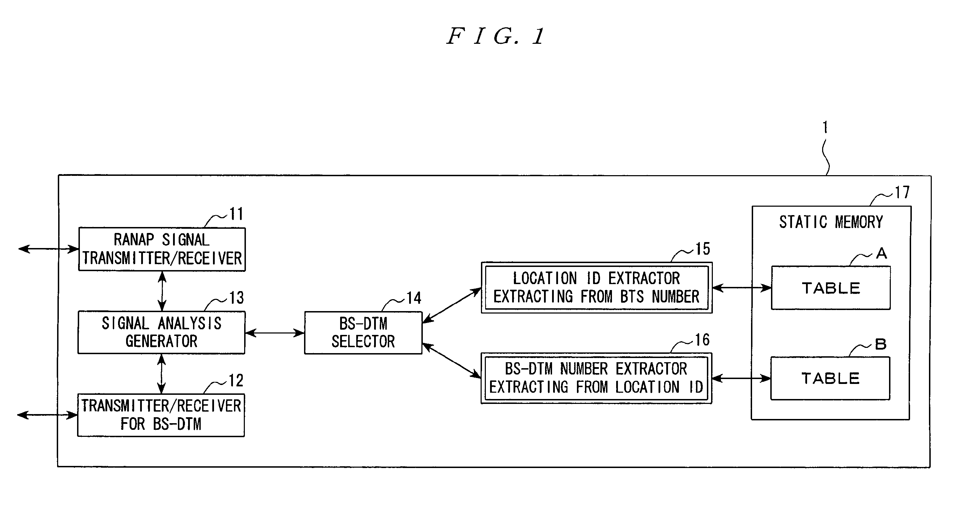

FIG. 1 is a block diagram illustrative of an example of main configuration of an RNC 1 in a radio communication system according to the present example. FIG. 1 illustrates the components relating to a BS-DTM select function.
In FIG. 1, a RANAP signal transmitter/receiver 11, a transmitter/receiver for BS-DTM 12, a signal analysis generator 13, and a BS-DTM selector 14 are existing functional components. In the present system, there are provided a Location ID extractor extracting from BTS number 15 and a BS-DTM number extractor extracting from Location ID 16. A static memory 17 holds a table (Table) A and a table (Table) B.

The process flow in the RNC 1 with such a configuration will be described as follows. When the RANAP signal transmitter/receiver 11 receives a radio access setup request from an upper node, the request is passed onto the signal analysis generator 13 and is then shifted to a BS-DTM select procedure to be described below.
In the BS-DTM select procedure, the signal analysis generator 13 receives a corresponding BTS number, the corresponding BTS number is attached to a BS-DTM select signal, and is passed to the BS-DTM selector 14. Next, the Location ID extractor extracting from BTS number 15 extracts the Location ID from the corresponding BTS number.

Then, the BS-DTM number extractor extracting from Location ID 16 extracts the BS-DTM number from the Location ID. Such extracted BS-DTM number is attached to a BS-DTM select signal, and is transmitted back to the signal analysis generator 13. The signal analysis generator 13 attaches the extracted BS-DTM number to the BS-DTM line setup signal and is then passed to the transmitter/receiver for BS-DTM 12. The transmitter/receiver for BS-DTM 12 transmits a BS-DTM line setup signal to the corresponding BS-DTM.

Incidentally, it is common that the RNC 1 includes a functional part such as a call processor or a device controller. However, the illustration or description of any functional part that is not related to the present embodiment will be omitted herein.
Additionally, another configuration can be conceived in such a manner that Table A and Table B are provided in another device, instead of in an RNC. In this case, the RNC will refer to Table A or Table B in another device.

### (Example of Table Configuration)

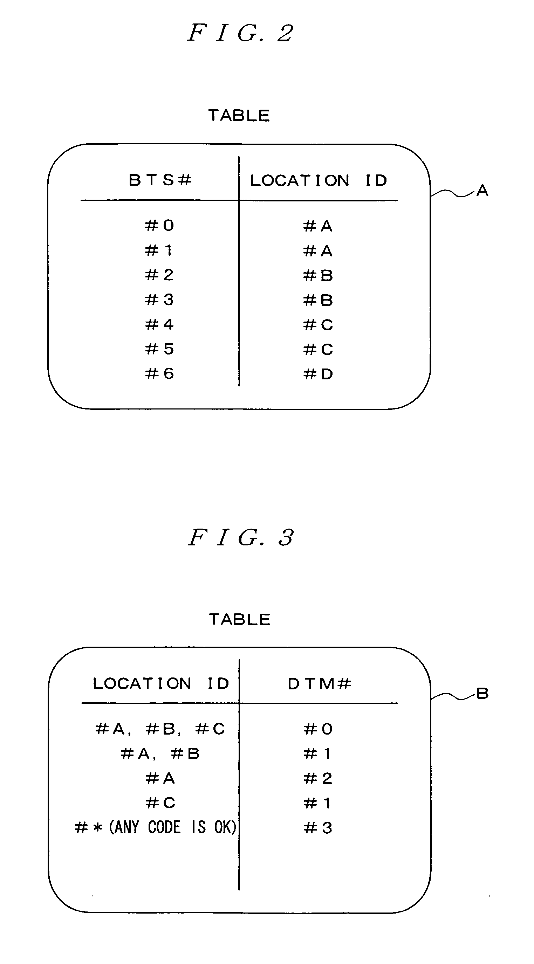

An example of table configuration of Table A and Table B to be used in the present system will be described with reference to FIG. 2 and FIG. 3.
FIG. 2 illustrates an example of a correspondence table between a BTS number that is an identifier of a BTS and a Location ID thereof. In FIG. 2, a BTS number "#0" has a corresponding Location ID "#A". Likewise, a BTS number "#1" has a corresponding Location ID "#A", a BTS number "#2" has a corresponding Location ID "#B", a BTS number "#3" has a corresponding Location ID "#B", a BTS number "#4" has a corresponding Location ID "#C", a BTS number "#5" has a corresponding Location ID "#C", and a BTS number "#6" has a corresponding Location ID "#D".

Meanwhile, FIG. 3 illustrates an example of a correspondence table between a Location ID and a BS-DTM number that is a BS-DTM identifier. In FIG. 3, the BS-DTM number "#2" corresponds to the Location ID "#A", and the BS-DTM number "#1" corresponds to the Location ID "#C".
In addition, as illustrated in FIG. 3, multiple Location IDs may correspond to a single BS-DTM number. An example thereof is that the Location IDs "#A", "#B", and "#C" correspond to the BS-DTM number "#0".

Furthermore, a special identifier that is a Location ID "#*" is provided. If the Location ID extracted from the BTS number is not included in the correspondence table of FIG. 3, the Location ID is replaced with the afore-mentioned special identifier "#*" so that the BS-DTM can be selected.
For instance, if the Location ID is "#D", the Location ID is replaced with "#*", so the BS-DTM number "#3" is selected.

### (Select Process of BS-DTM)

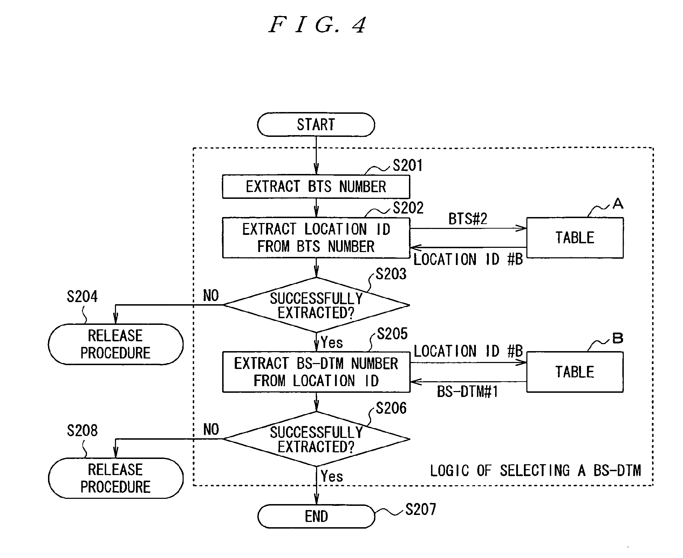

FIG. 4 illustrates a flowchart of an example of logic of selecting a BS-DTM when a call is originated in the present example. FIG. 4 illustrates the BS-DTM select process (S105), when a call is originated, in the above sequence of FIG. 9.
In FIG. 4, the BTS number used at the start of communication is extracted firstly (step S201). Next, the correspondence table A (hereinafter, referred to as Table A) of the BTS number and the Location ID illustrated in FIG. 2 is used to extract the Location ID from the BTS number (step S202). Then, whether or not the Location ID has been extracted from the BTS number is determined (step S203). If the Location ID has not been extracted, the processing goes onto a release procedure (step S203 → S204).

Meanwhile, if the Location ID has successfully been extracted, the processing goes to the next procedure (step S203 → S205). Next, the correspondence table B (hereinafter, referred to as Table B) of the Location ID and the BS-DTM number is used to extract the BS-DTM number from the Location ID (step S205). Then, whether or not the BS-DTM number has been extracted from the Location ID is determined (step S206). If the BS-DTM number has successfully been extracted, the BS-DTM has been extracted from the BTS number by use of the Location ID, so the processing ends (step S206 → S207). If the BS-DTM has not been extracted with the use of the Location ID as key information, the processing goes onto a release procedure (step S206 → S208).
In a case where the above select logic is employed, regarding the BTS number "#2", for instance, Table A is used at step S202 and the Location ID is "#A". Regarding the Location ID "#A", Table B is used at step S205 and the BS-DTM number is "#1".

### (Extraction of BS-DTM from Location ID)

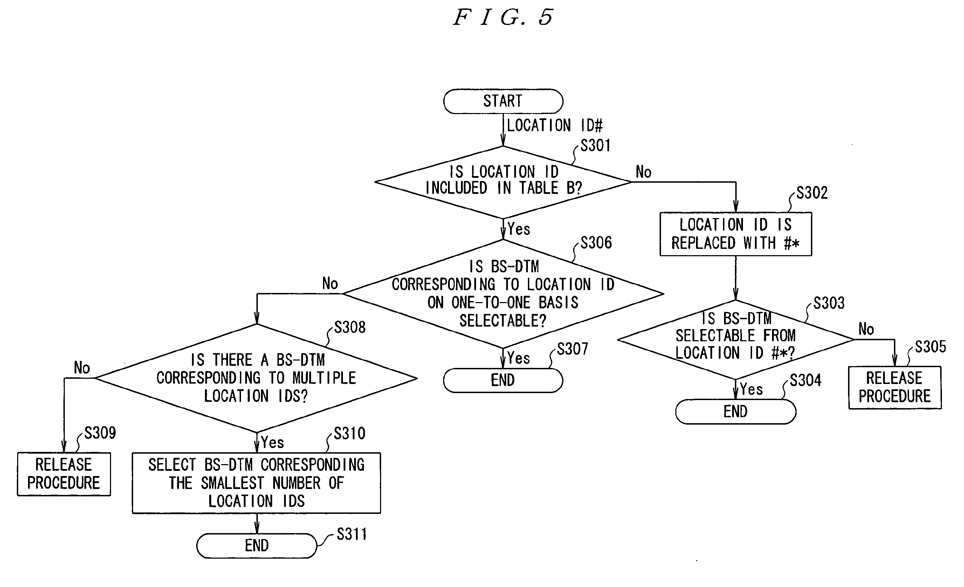

FIG. 5 is a flowchart illustrative of a process of extracting a BS-DTM from a Location ID, in detail. In FIG. 5, whether or not the Location ID (extracted from Table A with the BTS number used as key information) passed from the former step of S203 is included in Table B is determined firstly (step S301). If the corresponding Location ID is not included in Table B, the corresponding Location ID is replaced with the Location ID "#*" (step S302). The Location ID "#*" is a special identifier to be replaced for selecting a BS-DTM, if the Location ID that has been extracted from the BTS number is not included in Table B.

Next, whether or not the BS-DTM can be selected with the Location ID "#*" used as key information is determined (step S303). If the BS-DTM is successfully selected, the BS-DTM extraction flow by use of the Location ID ends (step S303 → S304). In other words, the above flow corresponds to a case where the BS-DTM is selected from the BTS #6, and BS-DTM #3 is selected. Conversely, if the BS-DTM cannot be selected, the processing goes onto a release procedure (step S303 → S305).

A process of a case where the corresponding Location ID is included in Table B will now be described. The process to be described below is applicable to a case where multiple Location IDs correspond to a single BS-DTM as illustrated in FIG. 3. If the corresponding Location ID is included in Table B, whether or not the BS-DTM corresponding to the Location ID on one-to-one basis can be selected is determined (step S301 → S306). As a result of the determination, if the BS-DTM corresponding to the Location ID on one-to-one basis can be selected, the BS-DTM extraction flow by use of the Location ID ends (step S301 → S307). In other words, the above flow corresponds to a case where the BS-DTM is selected from the BTS "#0", "#1", "#4", and "#5". The BS-DTM "#2" is selected in a case where the BTS is "#0" or "#1", whereas the BS-DTM "#1" is selected in a case where the BTS is "#4 or "#5".

If the BS-DTM corresponding to the Location ID on one-to-one basis cannot be selected, the following process will be performed. Whether or not there is a BS-DTM corresponding to multiple Location IDs is determined (step S306 → S308). Then, if there is no BS-DTM corresponding to multiple Location IDs, the processing goes onto a release procedure (step S308 → S309).

Conversely, if there is a BS-DTM corresponding to multiple Location IDs, the BS-DTM corresponding to the smallest number of the Location IDs is selected (step S308 → S310). The BS-DTM extraction flow by use of the Location ID ends (step S310 → S311). In other words, the above flow corresponds to a case where the BS-DTM is selected from BTS "#2" or "#3", and the BS-DTM "#1" is selected.

### (Application of Location ID)

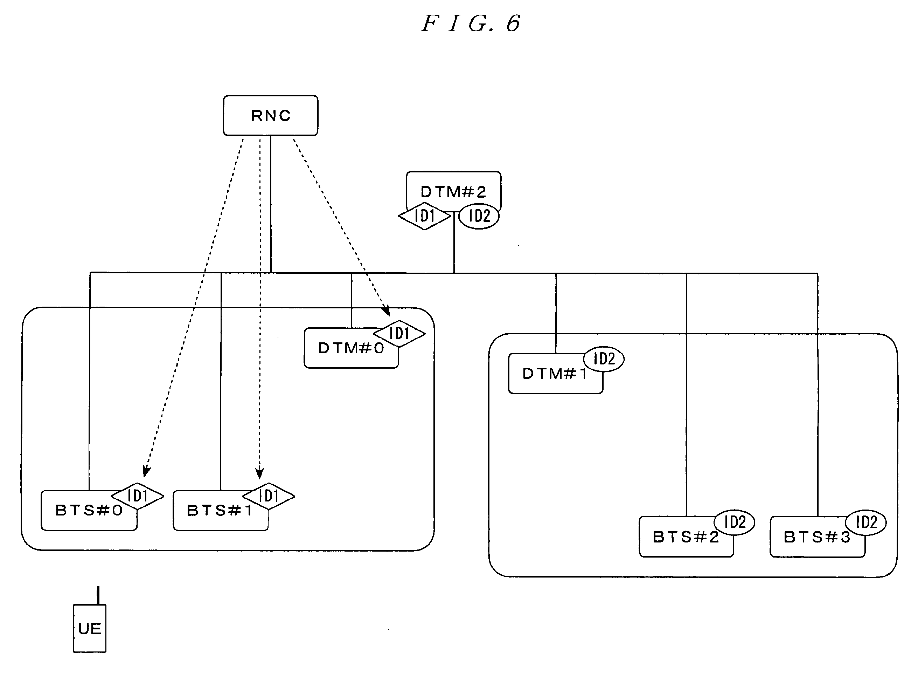

FIG. 6 is a view illustrative of an image of applying a Location ID. Referring to FIG. 6, an identical Location ID is applied beforehand to a BS-DTM and a BTS that are close to each other in distance including a consideration of a network topology. Then, the RNC 1 holds Table A (an example is FIG. 2) that is a table in which BTS numbers and Location IDs are corresponding to each other, respectively, and Table B (an example is FIG. 3) in which Location IDs and BS-DTM numbers are corresponding to each other, respectively.

In the present example, a Location ID "ID1" is applied to the BTS "#0" and the BTS "#1". Next, the Location ID "ID1" identical to those of the BTS "#0" and the BTS "#1" is applied to the BS-DTM "#0", which is close to the BTS "#0" and the BTS "#1".
Also, a Location ID "ID2" is applied to the BTS "#2" and the BTS "#3". Then, the Location ID "ID2" identical to those of the BTS "#2" and the BTS "#3" is applied to the BS-DTM "#1", which is close to the BTS "#2" and the BTS "#3".
Incidentally, as illustrated in FIG. 6, the Location IDs "ID1" and "ID2" may be applicable to the BS-DTM "#2" to be a commonly available BS-DTM.

Furthermore, a new BS-DTM may be provided to be applied with a Location ID "#*" that is a special identifier. Such a newly provided BS-DTM will be commonly available nationwide. This allows the selection of the BS-DTM, even if the information of correspondence between the Location ID and the BS-DTM is not updated at the time when facilities are added or reduced. The maintenance operations will be curtailed.
Moreover, if the special identifier "#*" is not provided, another operation will be needed so that all of the Location IDs nationwide are corresponding to a newly setup BS-DTM.
That is, in the present example, the provision of the special identifier "#*" eliminates such an operation.

### (Distance Including Consideration of Network Topology)

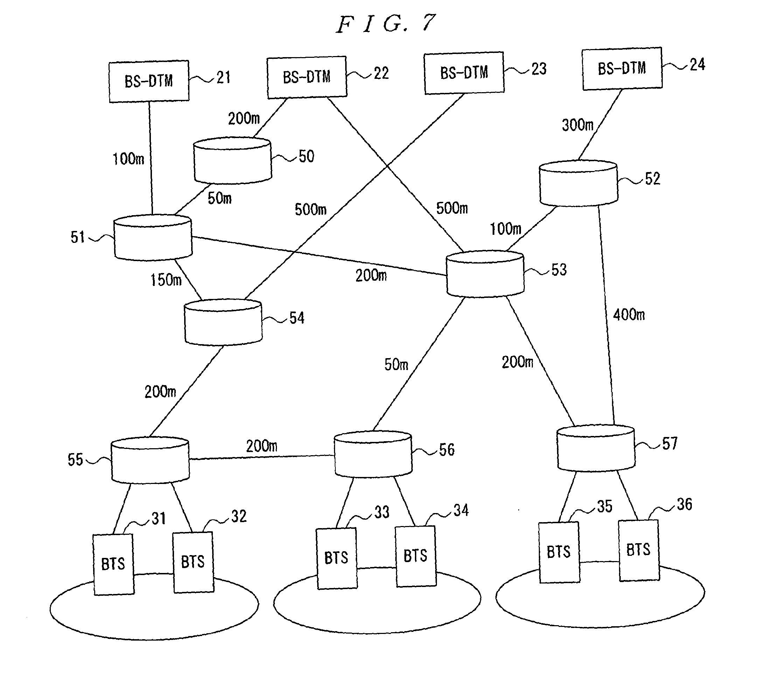

Referring now to FIG. 7, examples of criteria for determining that it is close in distance including the consideration of the network topology will be described. FIG. 7 illustrates four BS-DTMs 21 to 24, six BTSs 31 to 36, and eight routers 50 to 57 that are arranged between the BS-DTMs and the BTSs. Each of numerals (such as 100m) in FIG. 7 indicates a physical distance between the respective apparatuses. Instead of each router, a switch (that is a mobile switching center) may be provided. In such a network configuration, one of the following examples of criteria (1) to (3) is employed to determine the distance including the consideration of the network topology.

### (1) Example of a criterion is a hop number between routers

The path with the smallest number of the hops between the routers is assumed to be the shortest distance including the consideration of the network topology between a BTS and a BS-DTM. If this criterion is employed and if a user equipment is included in an area of the BTS 31 or the BTS 32, the BS-DTM 23 is the closest (by way of the router 55 to the router 54). If a user equipment is included in an area of the BTS 33 or the BTS 34, the BS-DTM 22 is the closest (by way of the router 56 to the router 53). If a user equipment is included in an area of the BTS 35 or the BTS 36, the BS-DTM 22 is the closest (by way of the router 57 to the router 53) or the BS-DTM 24 is the closest (by way of the router 57 to the router 52).

### (2) Example of a criterion is an overall distance of a transmission path

The distance of a transmission path between a BTS and a BS-DTM is assumed to be the shortest distance. If this criterion is employed and if a user equipment is included in an area of the BTS 33 or the BTS 34, the BS-DTM 21 is the closest (by way of the router 56, through the router 53, to the router 51).

### (3) Example of a criterion is a distance of the closest transmission path

The shortest transmission path to the next router (or switch) is assumed to be the shortest distance. If this criterion is employed and if a user equipment is included in an area of the BTS 33 or the BTS 34, the BS-DTM 24 is the closest (by way of the router 56, through the router 53, to the router 52).
Additionally, the information on the paths may be registered beforehand in a fixed manner on the basis of the above criteria (such as the number of the hops, distance, or the like), so as to enable routing in accordance with the registered path information. Further, FIG. 7 illustrates two BTSs included in an area of each router. However, one BTS may be provided, and there are no limitations on the number of the BTSs.

### (Communication Path Setting Method)

In the above radio communication system, a communication path setting method, to be described below, is employed. That is a communication path setting method for setting up a communication path by use of a transmission device and a base transceiver station to be selected for every call at the time of originating communication. The method includes: a step of referring to a first table indicative of a correspondence relationship between an identifier that is applied in accordance with a distance, from a given device, including a consideration of a network topology; a step of referring to a second table indicative of a correspondence relationship between the identifier and the transmission device; and the base transceiver station (this step corresponds to step S202 of FIG. 4, for example); and a step of setting up a communication path by use of the transmission device that has been selected on the basis of a result of referring to the first and second tables (this step corresponds to steps S107 and S108 of FIG. 9, for example).
With such a communication path setting method, since the first and second tables are used, a communication path is set up in an appropriate manner by referring to the identifier in the tables, even if the correspondence relationship among the transmission device, the base transceiver station, and the identifier is complicated.

### (Conclusion)

According to an aspect of the present invention as described heretofore, a transmission device is selected on the basis of information on correspondence between a base transceiver station and an identifier, and that between the identifier and a transmission device. Such a selection suppresses loss in a transmission path cost, transmission delay of user data, and load applied on a transmission path, to be addressed, between the transmission device and the base transceiver station, in implementing a mobile communication network in which the communication path for user data is shortened by utilizing the user data functionality of the radio network controller and turning the user data at the data transmission device instead of going through a radio network controller.
In addition, multiple identifiers corresponds to a single transmission device so that the transmission device is selected on the basis of the number of the corresponding identifiers, thereby allowing the transmission device to be commonly used and suppressing the equipment cost of the transmission device.

Further, a special identifier is provided so that if an identifier extracted from the information on correspondence between the base transceiver station and identifier is not found in the information on correspondence between the identifier and the transmission device, the extracted identifier is replaced with the special identifier. This allows the selection of the transmission device corresponding to the special identifier. Accordingly, even if the identifier is changed because of the change in the network configuration and there is no identifier that is extracted from the information on correspondence between the identifier and the transmission device, the transmission device can be selected. Confirmation and update operations for confirming and updating whether or not all identifiers correspond to the transmission devices can be curtailed, and the maintenance operations in the network operation can also be curtailed.

### Industrial Applicability

The present invention is applicable to a case where a communication path is set up by use of a transmission device and a base transceiver station to be selected for every call at the time of originating communication.

## Claims

1. A radio network controller that sets up a communication path by use of a transmission device and a base transceiver station to be selected for every call, when communication is originated, the radio network controller comprising select means for selecting the transmission device and the base transceiver station that are close to each other in distance including a consideration of a network topology,
wherein the communication path is set up by use of the transmission device and the base transceiver station selected by the select means.

2. The radio network controller according to claim 1, further comprising a table in which an identical identifier is applied to the transmission device and the base transceiver station that are close to each other in distance including the consideration of the network topology,
wherein the select means selects the transmission device and the base transceiver station to be used for setting up the communication path, on the basis of the identifier.

3. The radio network controller according to claim 2, wherein:
the table comprises: a first table indicative of a correspondence relationship between the identifier and the base transceiver station, the identifier being applied in accordance with a distance from a given device in consideration of the network topology; and a second table indicative of a correspondence relationship between the identifier and the transmission device, and
the select means refers to the first table and the second table and selects the transmission device.

4. The radio network controller according to claim 2 or 3, wherein:
a plurality of the identifiers are applied to a single transmission device in the table, and
the select means selects the transmission device on the basis of the number of the identifiers to be corresponding thereto.

5. The radio network controller according to claim 3, wherein:
the second table includes a correspondence relationship between a special identifier that is not included in the first table and the transmission device corresponding to the special identifier, and
the select means selects the transmission device corresponding to the special identifier, if the identifier extracted by referring to the first table is not included in the second table.

6. A radio communication system that sets up a communication path by use of a transmission device and a base transceiver station, the system comprising select means for selecting the transmission device and the base transceiver station that are close to each other in distance including a consideration of a network topology, wherein the communication path is set up by use of the transmission device and the base transceiver station selected by the select means.

7. A communication path setting method for setting up a communication path by use of a transmission device and a base transceiver station to be selected for every call, when communication is originated, the method comprising:
referring to a first table indicative of a correspondence relationship between an identifier and the base transceiver station, the identifier being applied in accordance with a distance from a given device in consideration of a network topology;
referring to a second table indicative of a correspondence relationship between the identifier and the transmission device; and
setting up the communication path by use of the transmission device that has been selected on the basis of a result of referring to the first table and the second table.
